# EUROPEAN PATENT SPECIFICATION

(11) **EP 3 473 881 B1**
(45) Date of publication and mention of the grant of the patent: **06.10.2021**
(21) Application number: 16906214.8
(22) Date of filing: 20.06.2016
(51) Int. Cl.: F16D 55/227, F16D 65/18, F16D 55/00

(54) **CALIPER BODY FOR VEHICLE DISC BRAKE**
SATTELKÖRPER FÜR FAHRZEUGSCHEIBENBREMSE
CORPS D'ÉTRIER POUR FREIN À DISQUE DE VÉHICULE

(43) Date of publication of application: 24.04.2019
(73) Proprietor: Hitachi Astemo, Ltd., Hitachinaka-shi, Ibaraki 312-8503 (JP)
(72) Inventor: ATSUTA, Daiki, Tomi-shi Nagano 389-0514 (JP); URASHIMA, Yuki, Tomi-shi Nagano 389-0514 (JP)
(74) Representative: Hoefer & Partner Patentanwälte mbB
(86) International application number: PCT/JP2016/068249
(87) International publication number: WO 2017/221295

(56) References cited:
- JP-A- 2010 043 747
- JP-A- 2010 043 747
- JP-A- 2013 123 968
- JP-B2- 4 988 637
- JP-U- H0 540 630

## Description

### Technical Field

The present invention relates to a caliper body for a vehicle disc brake installed in a vehicle such as a four-wheeled vehicle or a motorcycle, more particularly to a caliper body for a vehicle disc brake in which a plurality of cylinder holes formed in a working section is communicated with each other via a communication hole.

### Background Art

Conventionally, there is a caliper body in which a plurality of cylinder holes is formed in a working section, a cylinder hole for a first brake system is separated from a cylinder hole for a second brake system, a hydraulic pressure is supplied to the cylinder hole for the first brake system by operating one brake operating member, and a hydraulic pressure is supplied to the cylinder hole for the second brake system by operating the other brake operating member. As this two-brake-system caliper body, there is a caliper body in which at least one cylinder hole for the second brake system is disposed between two cylinder holes for the first brake system, the cylinder holes for the first brake system are communicated with each other via a communication hole, a connection hole opened to the outer surface of the caliper body is provided in the cylinder hole for the first system disposed in the uppermost part when the caliper body is installed in a vehicle body, and a bleeder hole to which a bleeder screw is attached is formed in the connection hole (see, for example, PTL 1 and PTL 2).
JP H05 40630 U1 shows a caliper body of a hydraulic disc brake to be mounted on a vehicle such as a four-wheeled vehicle or a motorcycle. A plurality of cylinder holes is provided in the working portion of the caliper body.
JP 2010 043747 A shows a disc brake that is configured so that two mounting bolt holes which are formed along disc radial direction are provided in outer side cylinder part and a bore side end in disc rotational direction of the mounting bolt holes is disposed by dislocating from range of disc axial direction of an inner recess part and a recessed part which extends from the inner recess part in disc rotational direction is formed in the inner recess part of bores of an inner side cylinder part and an outer side cylinder part, respectively and the opposed bores of the inner side cylinder part and the outer side cylinder part is fluidly communicated with each other by fluidly communicating each of the recessed part with connection path.

### Citation List

### Patent Literature

PTL 1: Japanese Patent No. 4892571
PTL 2: Japanese Patent No. 4988637

### Summary of Invention

### Technical Problem

However, since the connection hole is opened in the peripheral wall of the cylinder hole in the caliper body described in PTL 1 above, the cylinder hole may be affected when the bleeder screw is screwed into the bleeder hole. In addition, since cylindrical recesses are formed in the bottoms of the cylinder holes for the first brake system and the connection hole is opened in the recesses in the caliper body described in PTL 2, although the cylinder hole is not affected even when the bleeder screw is screwed into the connection hole, machining takes effort because the positions in which the connection hole and the communication hole are formed deviate in a disc inward-outward direction. In addition, since the recesses are formed in a cylindrical shape, if the positions in which the connection hole is connected to the recesses deviate from the upper end in the vertical direction when the caliper body is installed in the vehicle body, air easily accumulates on the upper surfaces of the recesses, thereby degrading air extractability.

Therefore, an object of the invention is to provide a caliper body for a vehicle disc brake having a plurality of cylinder holes in the working section that can improve processability and air extractability.

### Solution to Problem

To achieve the above object, according to the invention, there is provided a caliper body for a vehicle disc brake, the caliper body including a working section disposed on a side of a disc rotor, the working section having a plurality of cylinder holes disposed side by side in a disc circumference direction, the cylinder holes being communicated with each other via a communication hole, in which the plurality of cylinder holes including a cylinder hole disposed in an uppermost part when the caliper body is installed in a vehicle body are communicated with each other via the communication hole and recesses to which the communication hole is connected are formed in bottoms of the plurality of the cylinder holes communicated with each other via the communication hole, a connection hole opened to an outer surface of the caliper body is formed in the recess of the cylinder hole disposed in the uppermost part when the caliper body is installed in the vehicle body, the connection hole being aligned with the communication hole on the same straight line, and the communication hole or the connection hole is connected in positions in the recesses that become an upper end when the caliper body is installed in the vehicle body and slanted air extraction sections that are slanted toward the upper end are formed in the recesses.

In addition, preferably, the plurality of cylinder holes provided in the working section includes three or more cylinder holes, at least any two of the cylinder holes are used as cylinder holes for a first brake system and the other cylinder hole is used as a cylinder hole for a second brake system, and the cylinder holes for the first brake system are communicated with each other via the communication hole. In addition, preferably, the cylinder hole for the second brake system is disposed between the two cylinder holes for the first brake system, the cylinder hole for the second brake system is formed to have a deep bottom with a depth in an axial line direction larger than a depth in an axial line direction of the cylinder holes for the first brake system, and the communication hole passes outside a peripheral wall of the cylinder hole for the second brake system.

### Advantageous Effects of Invention

Since the connection hole and the communication hole are formed on the same straight line in the caliper body for the vehicle disc brake according to the invention, the connection hole and the communication hole can be bored in one process and processability can be improved. In addition, in the recesses formed in the bottoms of the cylinder holes, since the communication hole or the connection hole is connected to the position that becomes the upper end when the caliper body is installed in the vehicle body and the slanted air extraction sections slanted to the upper end are formed, air is not accumulated on the upper surfaces of the recesses when an operating fluid is supplied and air can be extracted preferably via the connection hole.

In addition, since three or more cylinder holes are provided in the working section, at least any two of the cylinder holes are used as the cylinder holes for the first brake system, the other cylinder hole is used as the cylinder hole for the second brake system, and the cylinder holes for the first brake system are communicated with each other via the communication hole, the processability and air extractability of the two-system caliper body can be improved.

In addition, in the caliper body in which the cylinder hole for the second brake system is disposed between the two cylinder holes for the first brake system, the cylinder hole for the second brake system is formed to have a deep bottom with a depth in an axial line direction larger than a depth in an axial line direction of the cylinder holes for the first brake system, and the communication hole passes through the side surface of the cylinder hole for the second brake system, since processability and air extractability can be improved and the recesses are formed in thick parts of the bottom walls of the cylinder holes with a shallow depth for the first brake system when the outer surface of the working section is formed in a planar shape in consideration of design, increase in the weight of the caliper body can be prevented.

### Brief Description of Drawings

[Fig. 1] Fig. 1 is a cross sectional view taken along line I-I in Fig. 3.
[Fig. 2] Fig. 2 is a cross sectional view taken along line II-II in Fig. 4.
[Fig. 3] Fig. 3 is a plan view illustrating a vehicle disc brake according to a first embodiment of the invention.
[Fig. 4] Fig. 4 is a front view illustrating the vehicle disc brake according to the first embodiment.
[Fig. 5] Fig. 5 is a cross sectional view taken along line V-V in Fig. 7.
[Fig. 6] Fig. 6 is a cross sectional view taken along line VI-VI in Fig. 7.
[Fig. 7] Fig. 7 is a side view illustrating the vehicle disc brake according to the first embodiment of the invention.
[Fig. 8] Fig. 8 is a cross sectional view illustrating a vehicle disc brake according to a second embodiment of the invention.

### Description of Embodiments

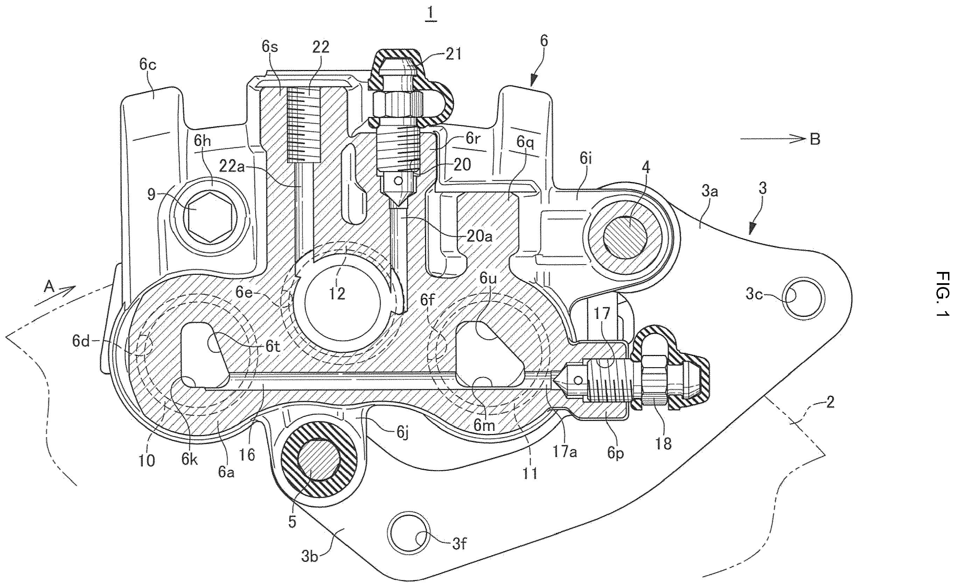

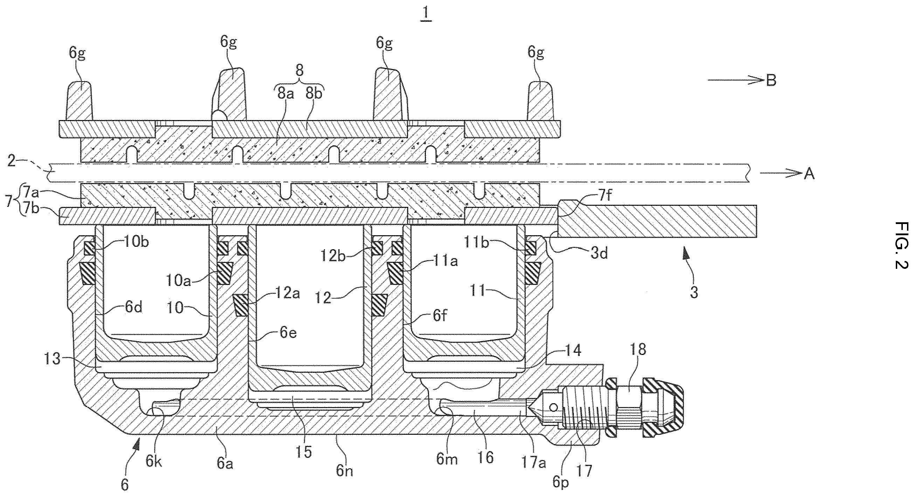

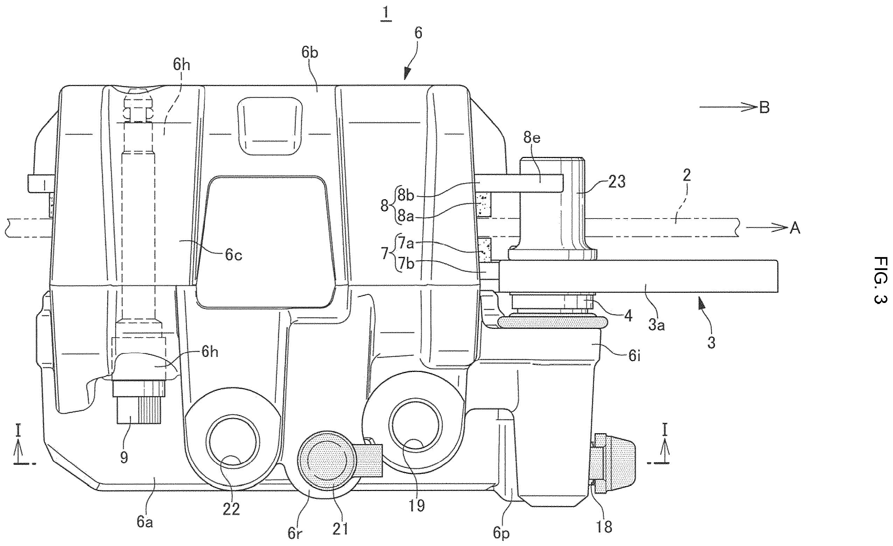

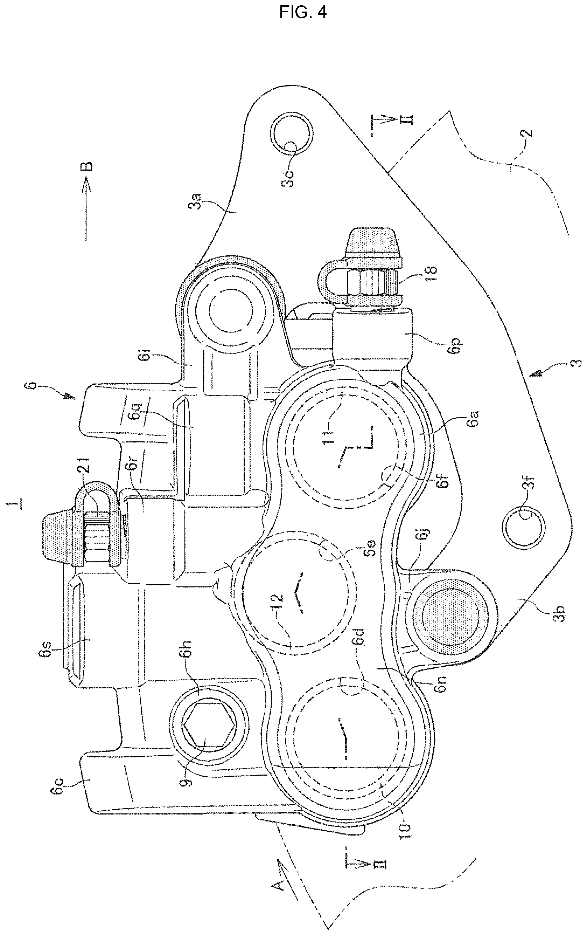

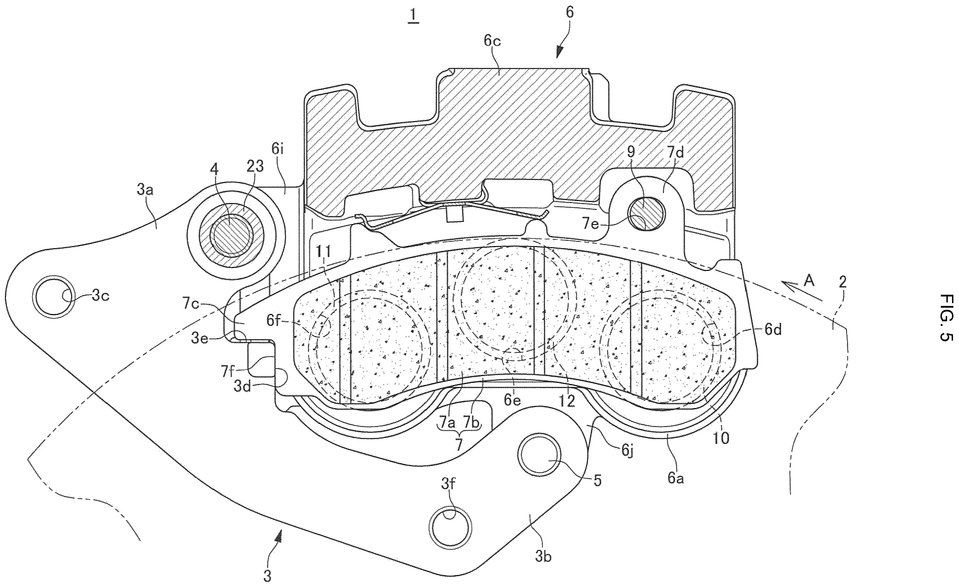

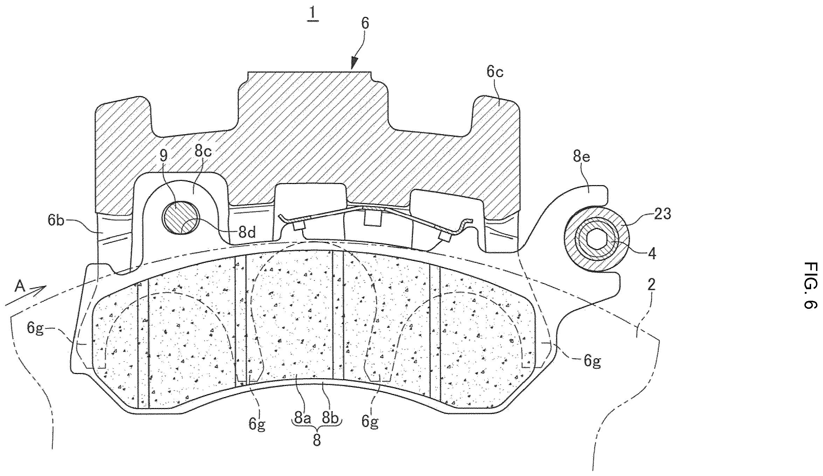

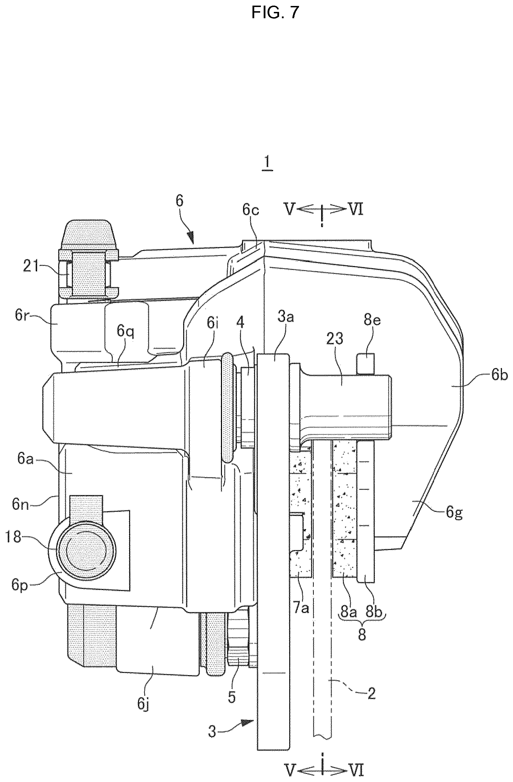

Fig. 1 to Fig. 7 illustrate a caliper body for a vehicle disc brake according to a first embodiment of the invention and an arrow A indicates the rotational direction of a disc rotor that rotates together with a wheel when a vehicle moves forward and a disc turn-out side and a disc turn-in side, which will be described later, also assume that the vehicle move forward. In addition, an arrow B indicates the upward direction (upward in the vertical direction) of the vehicle body when the vehicle disc brake according to the invention is installed in the vehicle body.

A vehicle disc brake 1 according to the embodiment is used for a front brake of a motorcycle and includes a caliper bracket 3 fixed to a vehicle body on one side of a disc rotor 2, a caliper body 6 supported by the caliper bracket 3 via a pair of slide pins 4 and 5, and a pair of friction pads 7 and 8 disposed so as to face each other on both sides of the disc rotor 2.

The caliper body 6 includes a working section 6a and a reaction section 6b that are disposed on both sides of the disc rotor 2 and a bridge section 6c that couples the working section 6a and the reaction section 6b over an outer periphery of the disc rotor 2. The caliper body 6 is of three-pot two-system type in which three cylinder holes 6d, 6e, and 6f formed in the working section 6a are divided into two hydraulic pressure systems. The working section 6a has the cylinder holes 6d, 6e, and 6f, opened to the disc rotor side, that are disposed side by side and the reaction section 6b has four reaction force pawls 6g. Mount sections 6h for a hanger pin 9 that hangs the friction pads 7 and 8 are provided on the disc turn-in side of the working section 6a and the reaction section 6b and mount arms 6i and 6j for the slide pins 4 and 5 extend on the disc turn-out side and a disc inner peripheral side of the working section 6a.

Of the cylinder holes 6d, 6e, and 6f, the cylinder hole 6d on the disc turn-in side and the cylinder hole 6f on the disc turn-out side are formed on the inner side in the disc radial direction and the cylinder hole 6e in the middle in the disc circumference direction is formed on the outer side in the disc radial direction. The cylinder hole 6d on the disc turn-in side and the cylinder hole 6f on the disc turn-out side are formed to have the same depth and the cylinder hole 6e in the middle is formed to have a depth larger than in the cylinder hole 6d on the disc turn-in side and the cylinder hole 6f on the disc turn-out side. The cylinder hole 6d on the disc turn-in side and the cylinder hole 6f on the disc turn-out side are cylinder holes for a first brake system and the cylinder hole 6e in the middle is a cylinder hole for a second brake system. In addition, recesses 6k and 6m are formed in the bottoms of the cylinder holes 6d and 6f for the first brake system, respectively.

Pistons 10 and 11 having the same length are inserted into the cylinder hole 6d on the disc turn-in side and the cylinder hole 6f on the disc turn-out side via piston seals 10a and 11a and dust seals 10b and 11b and a piston 12 having a length larger than the pistons 10 and 11 is inserted into the cylinder hole 6e in the middle via a piston seal 12a and a dust seal 12b. A hydraulic chamber 13 is defined by the piston 10, the cylinder hole 6d, and the recess 6k on the disc turn-in side, a hydraulic chamber 14 is defined by the piston 11, the cylinder hole 6f, and the recess 6m on the disc turn-out side, and a hydraulic chamber 15 is defined by the piston 12 and the cylinder hole 6e, and the recesses 6k and 6m communicate with each other via a communication hole 16 that passes outside the peripheral wall of the cylinder hole 6e in the middle. In addition, an outer surface 6n of the working section 6a away from the disc rotor is formed in a planar shape, not a convexo-concave shape corresponding to the depths of the cylinder holes 6d, 6e, and 6f to enable application of decoration such as a logo.

A first bleeder boss section 6p projects in the part of the working section 6a on the inner side in the disc radial direction and on the disc turn-out side, a first union boss section 6q projects in the part of the working section 6a on the outer side in the disc radial direction and on the disc turn-out side, and a second bleeder boss section 6r and a second union boss section 6s project in the parts of the working section 6a on the outer side in the disc radial direction and in the middle in the disc circumference direction. In the first bleeder boss section 6p, a first bleeder hole 17 having a connection hole 17a communicating with the recess 6m of the cylinder hole 6f on the disc turn-out side is aligned with the communication hole 16 on the same straight line and a first bleeder screw 18 is screwed into the first bleeder hole 17. A first union hole 19 communicating with the inner peripheral wall of the cylinder hole 6f on the disc turn-out side via a connection hole (not illustrated) is formed in the first union boss section 6q. In addition, a second bleeder hole 20 having a connection hole 20a communicating with the inner peripheral wall of the cylinder hole 6e in the middle is formed in the second bleeder boss section 6r and a second bleeder screw 21 is screwed into the second bleeder hole 20. In addition, a second union hole 22 having a connection hole 22a communicating with the inner peripheral wall of the cylinder hole 6e in the middle is formed in the second union boss section 6s.

The caliper body 6 according to the embodiment is attached to the caliper bracket 3 with the disc turn-out side facing upward, the communication hole 16 is connected in a position (that becomes the upper end in the attachment state) in the recess 6k provided in the bottom of the cylinder hole 6d on the disc turn-in side, and the first bleeder hole 17 is connected in a position (that becomes the upper end in the attachment state) in the recess 6m provided in the bottom of the cylinder hole 6f on the disc turn-out side via the connection hole 17a. In addition, the recesses 6k and 6m are provided with slanted air extraction sections 6t and 6u, respectively, slanted from the lower part to the upper part toward the connection portion, connected to the communication hole 16 or the connection hole 17a, that becomes the upper end when the caliper body 6 is attached to the caliper bracket 3.

In the mount sections 6h and 6h formed in the working section 6a and the reaction section 6b, the hanger pin 9 is provided over the outside of the disc rotor 2 in parallel to the disc shaft, the parts of the friction pads 7 and 8 on the disc turn-in side are hung by the hanger pin 9, and the parts of the friction pads 7 and 8 on the disc turn-out side are supported by the caliper bracket 3 and a torque receiving pin 23, respectively.

The caliper bracket 3 is formed by press work of one plate member and includes a first slide pin mount arm 3a projecting to the outer side in the disc radial direction on the disc turn-out side and a second slide pin mount arm 3b projecting to the inner side in the disc radial direction on the disc turn-in side. The disc outer peripheral side of the first slide pin mount arm 3a is provided with a slide pin fitting hole to which the slide pin 4 is fitted and the part closer to the disc turn-out side than the slide pin fitting hole is provided with a bolt hole 3c to which one vehicle body mounting bolt is attached. In addition, the disc inner peripheral side of the first slide pin mount arm 3a is provided with a torque receiving surface 3d that receives a torque during braking from the friction pad 7 close to the working section and a support section 3e that supports an ear piece 7c formed in the friction pad 7 close to the working section that are formed so as to intersect orthogonally to each other. The second slide pin mount arm 3b has a slide pin insertion hole to which the other slide pin 5 is fixed and the part of the second slide pin mount arm 3b closer to the disc inner peripheral side than the slide pin insertion hole is provided with a bolt hole 3f to which the other vehicle body mounting bolt is attached.

The friction pads 7 and 8 are configured by fixing linings 7a and 8a in slidable contact with the side surfaces of the disc rotor 2 to metal back plates 7b and 8b, pad suspension sections 7d and 8c project in parts of the back plates 7b and 8b on the disc turn-in side and on the outer side in the disc radial direction and hanger pin insertion holes 7e and 8d are opened in the pad suspension sections 7d and 8c, respectively. The ear piece 7c supported by the caliper bracket 3 projects on the disc turn-out side of the back plate 7b of the friction pad 7 close to the working section and a torque transmission surface 7f that transmits a braking torque to the caliper bracket 3 during braking is formed on the disc turn-out side of the part of the back plate 7b. A bifurcated torque transmission arm 8e opened on the disc turn-out side is formed on the disc turn-out side of the back plate 8b of the friction pad 8 close to the reaction section. The friction pad 7 close to the working section is hung by inserting the hanger pin 9 into the hanger pin insertion hole 7e and disposed movably in the disc shaft direction between the pistons 10, 11, and 12 and one side surface of the disc rotor 2 by causing the support section 3e to support the ear piece 7c and bringing the torque transmission surface 7f into contact with the torque receiving surface 3d. In addition, the friction pad 8 close to the reaction section is hung by inserting the hanger pin 9 into the hanger pin insertion hole 8d and disposed movably in the disc shaft direction between the reaction force pawls 6g and the other side surface of the disc rotor 2 by holding substantially the semicircle of the torque receiving pin 23 using the torque transmission arm 8e.

In the vehicle disc brake 1 described above, when, for example, a lever for the front wheel is operated to introduce a hydraulic pressure generated in the first hydraulic pressure master cylinder from the first union hole 19 to the hydraulic chambers 13 and 14 via the communication hole 16, the pistons 10 and 11 moves forward in the cylinder holes 6d and 6f in the disc rotor direction to brake the front wheel. In addition, when, for example, a lever for the rear wheel is operated to introduce a hydraulic pressure generated in the second hydraulic pressure master cylinder from the second union hole 22 to the hydraulic chamber 15, the piston 12 moves forward in the cylinder hole 6e in the disc rotor direction to brake the front wheel and the disc brake for the rear wheel is operated to brake the rear wheel.

Since the connection hole 17a and the communication hole 16 are formed on the same straight line as described above in the embodiment, the connection hole 17a and the communication hole 16 can be bored in one process and processability can be improved. In addition, in the recess 6k provided in the bottom of the cylinder hole 6d on the disc turn-in side, the communication hole 16 is connected in a position that becomes the upper end when the caliper body 6 is attached to the caliper bracket 3. In the recess 6m provided in the bottom of the cylinder hole 6f on the disc turn-out side, the connection hole 17a of the first bleeder hole 17 is connected in a position that becomes the upper end when the caliper body 6 is attached to the caliper bracket 3. In addition, since the recesses 6k and 6m are provided with the slanted air extraction sections 6t and 6u slanted from the lower end to the upper end toward the communication hole 16 or the connection hole 17a, air is not accumulated on the upper surface of the recesses 6k and 6m when an operating fluid is supplied and air can be extracted preferably via the connection hole 17a and the bleeder screw 18. In addition, the outer surface 6n of the working section 6a away from the disc rotor is formed in a planar shape instead of a convexo-concave shape corresponding to the depths of the cylinder holes 6d, 6e, and 6f even in the three-pot two-system type caliper body 6 having the cylinder holes 6d, 6e, and 6f with different depths to enable application of decoration such as a logo in the embodiment. Since the recesses 6k and 6m are formed in the bottoms of the shallow cylinder holes conventionally having large wall thicknesses to remove part of the body, the design can be improved while preventing increase in the weight of the caliper body 6.

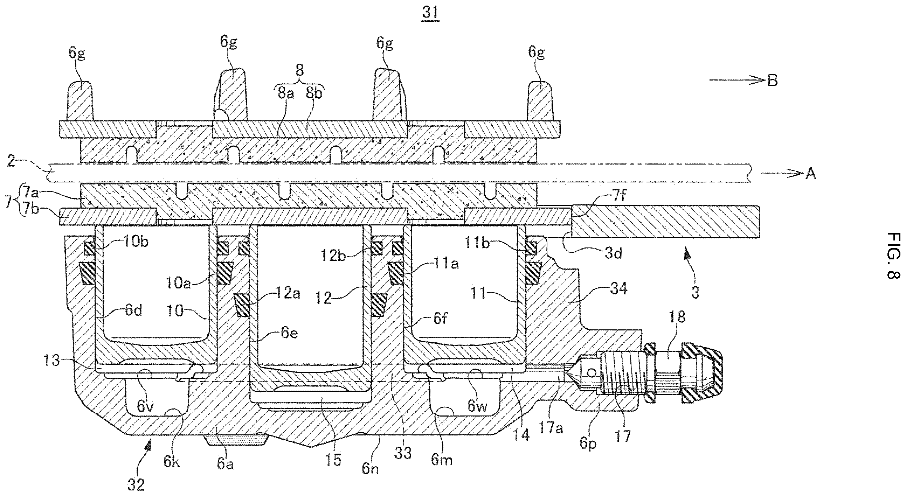

Fig. 8 illustrates a second embodiment of the invention and the same components as in the first embodiment are given the same reference numerals and detailed descriptions are omitted. In a caliper body 32 of a vehicle disc brake 31 according to the embodiment, the recesses 6k and 6m formed in the bottoms of the cylinder hole 6d on the disc turn-in side and the cylinder hole 6f on the disc turn-out side for the first brake system communicate with each other via a communication hole 33. The communication hole 33 according to the embodiment passes through a border section 6v between the bottom of the cylinder hole 6d and the recess 6k, a border section 6w between the bottom of the cylinder hole 6f and the recess 6m and passes outside the peripheral wall of the cylinder hole 6e in the middle. In addition, the part of the outer peripheral wall of the cylinder hole 6f on the disc turn-out side is provided with a build-up section 34.

It should be noted here that the invention is not limited to the above embodiments and applicable to a caliper body provided with a working section having two cylinder holes or four or more cylinder holes. In addition, the cylinder holes may have any diameters and any depths and the communication hole may be formed in any position as appropriate depending on the depths and positions of the cylinder holes. In addition, the invention is applicable not only to a two-system type caliper body in which a plurality of cylinder holes is divided into two hydraulic pressure systems, but also to a caliper body in which a plurality of cylinder holes has one system. In addition, the friction pad has any structure in which the friction pad may be hung by a plurality of hanger pins or the friction pad does not need to be hung by hanger pins. The invention is only limited within the scope of the appended claims.

### Reference Signs List

- 1:: vehicle disc brake
- 2:: disc rotor
- 3:: caliper bracket
- 3a:: first slide pin mount arm
- 3b:: second slide pin mount arm
- 3c, 3f:: bolt hole
- 3d:: torque receiving surface
- 3e:: support section
- 4, 5:: slide pin
- 6:: caliper body
- 6a:: working section
- 6b:: reaction section
- 6c:: bridge section
- 6d, 6e, 6f:: cylinder hole
- 6g:: reaction force pawl
- 6h:: mount section
- 6i, 6j:: mount arm
- 6k, 6m:: recess
- 6n:: outer surface
- 6p:: first bleeder boss section
- 6q:: first union boss section
- 6r:: second bleeder boss section
- 6s:: second union boss section
- 6t, 6u:: slanted air extraction section
- 6v, 6w:: border section
- 7:: friction pad
- 7a:: lining
- 7b:: back plate
- 7c:: ear piece
- 7d:: pad suspension section
- 7e:: hanger pin insertion hole
- 7f:: torque transmission surface
- 8:: friction pad
- 8a:: lining
- 8b:: back plate
- 8c:: pad suspension section
- 8d:: hanger pin insertion hole
- 8e:: torque transmission arm
- 9:: hanger pin
- 10, 11, 12:: piston
- 10a, 11a, 12a:: piston seal
- 10b, 11b, 12b:: dust seal
- 13, 14, 15:: hydraulic chamber
- 16:: communication hole
- 17:: first bleeder hole
- 17a:: connection hole
- 18:: first bleeder screw
- 19:: first union hole
- 20:: second bleeder hole
- 20a:: connection hole
- 21:: second bleeder screw
- 22:: second union hole
- 22a:: connection hole
- 23:: torque receiving pin
- 31:: vehicle disc brake
- 32:: caliper body
- 33:: communication hole
- 34:: build-up section

## Claims

1. A caliper body (6) for a vehicle disc brake (1), the caliper body (6) including a working section (6a) disposed on a side of a disc rotor (2), the working section (6a) having a plurality of cylinder holes (6d, 6e, 6f) disposed side by side in a disc circumference direction, the cylinder holes (6d, 6e, 6f) being communicated with each other via a communication hole (16),
wherein the plurality of cylinder holes (6d, 6e, 6f) including a cylinder hole (6f) disposed in an uppermost part when the caliper body (6) is installed in a vehicle body are communicated with each other via the communication hole (16) and recesses (6k, 6m) to which the communication hole (16) is connected are formed in bottoms of the plurality of the cylinder holes (6d, 6e, 6f) communicated with each other via the communication hole (16),
a connection hole (17a) opened to an outer surface of the caliper body (6) is formed in the recess (6m) of the cylinder hole (6f) disposed in the uppermost part when the caliper body is installed in the vehicle body, the connection hole (17a) being aligned with the communication hole (16) on the same straight line, and
the communication hole (16) or the connection hole (17a) is connected in positions in the recesses (6k, 6m) that become an upper end when the caliper body (6) is installed in the vehicle body,
**characterized in that**
slanted air extraction sections (6t, 6u) that are slanted toward the upper end are formed in the recesses (6k, 6m).

2. The caliper body for a vehicle disc brake according to claim 1,
wherein the plurality of cylinder holes (6d, 6e, 6f) provided in the working section (6a) includes three or more cylinder holes,
at least any two of the cylinder holes are used as cylinder holes (6d, 6f) for a first brake system and the other cylinder hole (6e) is used as a cylinder hole for a second brake system, and
the cylinder holes (6d, 6f) for the first brake system are communicated with each other via the communication hole (16).

3. The caliper body for a vehicle disc brake according to claim 2,
wherein the cylinder hole (6e) for the second brake system is disposed between the two cylinder holes (6d, 6f) for the first brake system,
the cylinder hole (6e) for the second brake system is formed to have a deep bottom with a depth in an axial line direction larger than a depth in an axial line direction of the cylinder holes (6d, 6f) for the first brake system, and
the communication hole (16) passes outside a peripheral wall of the cylinder hole (6e) for the second brake system.

## Patentansprüche

1. Bremssattelkörper (6) für eine Fahrzeugscheibenbremse (1), wobei der Bremssattelkörper (6) einen Arbeitsabschnitt (6a) umfasst, der auf einer Seite eines Scheibenrotors (2) angeordnet ist, wobei der Arbeitsabschnitt (6a) eine Vielzahl von Zylinderöffnungen (6d, 6e, 6f) aufweist, die nebeneinander in Scheibenumfangsrichtung angeordnet sind, wobei die Zylinderöffnungen (6d, 6e, 6f) über eine Kommunikationsöffnung (16) miteinander verbunden sind,
wobei die Vielzahl von Zylinderöffnungen (6d, 6e, 6f) einschließlich einer Zylinderöffnung (6f), die in einem obersten Bereich angeordnet ist, wenn der Bremssattelkörper (6) in einer Fahrzeugkarosserie eingebaut ist, über die Kommunikationsöffnung (16) miteinander in Verbindung stehen, und Ausnehmungen (6k, 6m), mit denen die Kommunikationsöffnung (16) verbunden ist, in Böden der Vielzahl der Zylinderöffnungen (6d, 6e, 6f) ausgebildet sind, die über die Kommunikationsöffnung (16) miteinander in Verbindung stehen,
eine Verbindungsöffnung (17a), die in einer Außenfläche des Bremssattelkörpers (6) mündet, in der Ausnehmung (6m) der Zylinderöffnung (6f) ausgebildet ist, die im obersten Bereich angeordnet ist, wenn der Bremssattelkörper in der Fahrzeugkarosserie eingebaut ist, wobei die Verbindungsöffnung (17a) mit der Kommunikationsöffnung (16) auf derselben geraden Linie ausgerichtet ist, und
die Kommunikationsöffnung (16) oder die Verbindungsöffnung (17a) an Positionen in den Ausnehmungen (6k, 6m) verbunden ist, die zu einem oberen Ende werden, wenn der Bremssattelkörper (6) in die Fahrzeugkarosserie eingebaut ist,
**dadurch gekennzeichnet, dass**
schräge Luftabzugsabschnitte (6t, 6u), die in Richtung des oberen Endes abgeschrägt sind, in den Ausnehmungen (6k, 6m) ausgebildet sind.

2. Bremssattelkörper für eine Fahrzeugscheibenbremse nach Anspruch 1,
wobei die Vielzahl von Zylinderöffnungen (6d, 6e, 6f), die im Arbeitsabschnitt (6a) vorgesehen sind, drei oder mehr Zylinderöffnungen umfasst,
zumindest zwei der Zylinderöffnungen als Zylinderöffnungen (6d, 61') für ein erstes Bremssystem verwendet werden und die andere Zylinderöffnung (6e) als Zylinderöffnung für ein zweites Bremssystem verwendet wird, und die Zylinderöffnungen (6d, 6f) für das erste Bremssystem über die Kommunikationsöffnung (16) miteinander verbunden sind.

3. Bremssattelkörper für eine Fahrzeugscheibenbremse nach Anspruch 2,
wobei die Zylinderöffnung (6e) für das zweite Bremssystem zwischen den beiden Zylinderöffnungen (6d, 6f) für das erste Bremssystem angeordnet ist,
die Zylinderöffnung (6e) für das zweite Bremssystem so ausgebildet ist, dass diese einen tiefen Boden mit einer Tiefe in Axiallinienrichtung aufweist, die größer als eine Tiefe in Axiallinienrichtung der Zylinderöffnungen (6d, 6f) für das erste Bremssystem ist, und
die Kommunikationsöffnung (16) außerhalb einer Umfangswand der Zylinderöffnung (6e) für das zweite Bremssystem verläuft.

## Revendications

1. Corps d'étrier (6) pour un frein à disque de véhicule (1), le corps d'étrier (6) comportant une section de travail (6a) disposée sur un côté d'un rotor de disque (2), la section de travail (6a) ayant une pluralité de trous de cylindre (6d, 6e, 6f) disposés côte à côte dans une direction circonférentielle de disque, les trous de cylindre (6d, 6e, 6f) étant en communication entre eux par l'intermédiaire d'un trou de communication (16),
dans lequel la pluralité de trous de cylindre (6d, 6e, 6f) comportant un trou de cylindre (6f) disposé dans la partie la plus haute lorsque le corps d'étrier (6) est installé dans un corps de véhicule communiquent entre eux par l'intermédiaire du trou de communication (16) et des évidements (6k, 6m) auxquels le trou de communication (16) est relié sont formés dans les fonds de la pluralité de trous de cylindre (6d, 6e, 6f) communiquant entre eux par l'intermédiaire du trou de communication (16),
un trou de liaison (17a) ouvert sur une surface extérieure du corps d'étrier (6) est formé dans l'évidement (6m) du trou de cylindre (6f) disposé dans la partie la plus haute lorsque le corps d'étrier est installé dans le corps de véhicule, le trou de liaison (17a) étant aligné avec le trou de communication (16) sur la même ligne droite, et
le trou de communication (16) ou le trou de liaison (17a) est relié dans des positions dans les évidements (6k, 6m) qui deviennent une extrémité supérieure lorsque le corps d'étrier (6) est installé dans le corps de véhicule,
**caractérisé en ce que**
des sections d'extraction d'air inclinées (6t, 6u) qui sont inclinées vers l'extrémité supérieure sont formées dans les évidements (6k, 6m).

2. Corps d'étrier pour un frein à disque de véhicule selon la revendication 1,
dans lequel la pluralité de trous de cylindre (6d, 6e, 6f) prévus dans la section de travail (6a) comporte trois trous de cylindre ou plus,
au moins deux trous quelconques des trous de cylindre sont utilisés comme trous de cylindre (6d, 6f) pour un premier système de freinage et l'autre trou de cylindre (6e) est utilisé comme trou de cylindre pour un deuxième système de freinage, et
les trous de cylindre (6d, 6f) pour le premier système de freinage communiquent entre eux par l'intermédiaire du trou de communication (16).

3. Corps d'étrier pour un frein à disque de véhicule selon la revendication 2,
dans lequel le trou de cylindre (6e) pour le deuxième système de freinage est disposé entre les deux trous de cylindre (6d, 6f) pour le premier système de freinage,
le trou de cylindre (6e) pour le deuxième système de freinage est formé de manière à avoir un fond profond avec une profondeur dans une direction de ligne axiale plus grande qu'une profondeur dans une direction de ligne axiale des trous de cylindre (6d, 6f) pour le premier système de freinage, et
le trou de communication (16) passe à l'extérieur d'une paroi périphérique du trou de cylindre (6e) pour le deuxième système de freinage.
